# EUROPEAN PATENT APPLICATION

(11) **EP 4 844 469 A1**
(43) Date of publication of application: **25.11.2026**
(21) Application number: 25178398.1
(22) Date of filing: 23.05.2025
(51) Int. Cl.: G02B 26/06

(54) **A MIRROR SYSTEM, A RADIATION SYSTEM COMPRISING A LASER SYSTEM, AND AN EXPOSURE APPARATUS COMPRISING A MIRROR SYSTEM**

(71) Applicant: ASML Netherlands B.V., 5500 AH Veldhoven (NL)
(72) Inventor: VAN BRAKEL, Robert, Frank, 5500 AH Veldhoven (NL); YUAN, Jiayue, 5500 AH Veldhoven (NL); LAMBREGTS, Dieter, Emmanuel, 5500 AH Veldhoven (NL); SWINKELS, Gerardus, Hubertus, Petrus, Maria, 5500 AH Veldhoven (NL); LANGE, Marc, Christian, 5500 AH Veldhoven (NL)
(74) Representative: ASML Netherlands B.V.

(57) **Abstract**

A mirror system comprising a deformable mirror configured to be arranged in an optical path of a laser system, the deformable mirror comprising a deformable reflective surface configured to reflect a laser beam generated by the laser system, and a cavity arranged behind the reflective surface, wherein the cavity comprises a fluid configured to be hydraulically pressurized, an actuator system configured to pressurize the fluid in the cavity for deforming a profile of the reflective surface, a controller configured to actuate the actuator system such that the fluid deforms the profile of the reflective surface to compensate for thermal transients.

## Description

### FIELD

The present invention relates to the field of lithography and semiconductor manufacturing. In particular, it pertains to a mirror system, a radiation system comprising a laser system, and an exposure system comprising a mirror system.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask) onto a layer of radiation-sensitive material (resist) provided on a substrate.

To project a pattern on a substrate a lithographic apparatus may use electromagnetic radiation. The wavelength of this radiation determines the minimum size of features which can be formed on the substrate. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

In EUV lithography, light is generated by hitting a tin (Sn) droplet with a high-power laser pulse. During normal operation, there are periods, such as during stepping or wafer exchange, when no exposure takes place. These dark periods result in no EUV generation. In current systems, the laser remains active during such periods but is aimed off-droplet to avoid producing EUV light. This approach still consumes full laser power, contributing to unnecessary energy use and heat load.

To improve energy efficiency, new strategies aim to reduce laser power during dark periods or even switch it off entirely. While this significantly cuts energy consumption and reduces thermal stress on system components, it also introduces fast thermal transients that can deform mirrors in the laser beam path.

Deformable mirrors are used to compensate for these thermally induced deformations. In general, the deformable mirror is part of the laser beam path of the EUV source system. The deformable mirrors in current systems use a pneumatic actuator and achieve a control bandwidth of around 20 Hz, which is sufficient for slow thermal changes, but not for fast fluctuations caused by more aggressive laser power switching. To handle faster thermal transients, future systems will require deformable mirrors with much higher control bandwidths.

The current bandwidth limitation is primarily due to the pneumatic actuation system. The natural frequency of the gas, combined with flow resistance in valves, imposes a ceiling on response speed. While commercial deformable mirrors do exist, their performance, especially under the high-power densities seen in EUV lithographic systems, is not sufficient to meet the strict requirements on wavefront quality and thermal stability.

There is therefore a need for a high-bandwidth deformable mirror system capable of surviving EUV-level laser loads while correcting fast thermal deformations in real time.

### SUMMARY

Therefore, according to an aspect of the invention there is provided a mirror system comprising
a deformable mirror configured to be arranged in an optical path of a laser system, the deformable mirror comprising
a deformable reflective surface configured to reflect a laser beam generated by the laser system, and
a cavity arranged behind the reflective surface, wherein the cavity comprises a fluid configured to be hydraulically pressurized,
an actuator system configured to pressurize the fluid in the cavity for deforming a profile of the reflective surface,
a controller configured to actuate the actuator system such that the fluid deforms the profile of the reflective surface to compensate for thermal transients.

In an embodiment, the fluid is a liquid, preferably an incompressible liquid such as water or oil.

In an embodiment, the actuator system comprises an electromagnetic actuator, magnetostrictive actuator or piezoelectric actuator configured to exert a force in order to pressurize the fluid.

In an embodiment, the actuator system comprises a movable body being in contact with the fluid, wherein the controller is configured to actuate the movable body such that the fluid deforms the reflective surface of the deformable mirror.

In an embodiment, the movable body is deformable such as a bellow or flexible membrane, for example a flexible magnetic membrane.

In an embodiment, the movable body is connected to a drive member, wherein the drive member is configured to move the movable body relative to the cavity such that the fluid deforms the reflective surface of the deformable mirror.

In an embodiment, the mirror system further comprises a fluid hose connected at one end to the cavity of the deformable mirror and at the other end to the movable body, wherein the fluid hose is configured to transport the fluid between the cavity and the movable body.

In an embodiment, the actuator system comprises
a high-pressure vessel with a high-pressure in-compartment for receiving a high-pressure fluid and a high-pressure out-compartment in fluid communication with the cavity, the high-pressure in- and out-compartments being separated by a first movable separation wall,
a low-pressure vessel with a low-pressure in-compartment for receiving a low-pressure fluid and a low-pressure out-compartment in fluid communication with the cavity, the low-pressure in-and out-compartments being separated by a second movable separation wall,
a high-pressure control valve being arranged in fluid communication between the high-pressure vessel and the cavity,
a low-pressure control valve being arranged in fluid communication between the low-pressure vessel and the cavity,
and wherein the controller is configured for actuating the high-pressure control valve and/or the low-pressure control valve to increase or decrease the pressure in the cavity.

In an embodiment, wherein, when the high-pressure control valve is actuated in an open state, the liquid flows from the high-pressure out-compartment to the cavity to increase the pressure in the cavity, and wherein, when the low-pressure control valve is actuated in an open state, the liquid flows from the cavity to the low-pressure out-compartment to decrease the pressure in the cavity.

In an embodiment, the actuator system comprises
a high-pressure fluid loop comprising
a high-pressure inlet for receiving a high-pressure fluid,
a circulation conduit in fluid communication with the high-pressure inlet and the actuator system is configured to circulate the high-pressure fluid through the circulation conduit, and
a high-pressure outlet being arranged in fluid communication between the circulation conduit and the cavity,
a low-pressure fluid conduit in fluid communication with the cavity,
a high-pressure loop control valve being arranged in fluid communication between the high-pressure fluid loop and the cavity,
a low-pressure loop control valve being arranged in fluid communication between the low-pressure fluid conduit and the cavity,
and wherein the controller is configured for actuating the high-pressure loop control valve and/or the low-pressure loop control valve to increase or decrease the pressure in the cavity.

In an embodiment, wherein, when the high-pressure loop control valve is actuated in an open state, the liquid flows from the high-pressure outlet to the cavity to increase the pressure in the cavity, and wherein, when the low-pressure loop control valve is actuated in an open state and the high-pressure loop control valve in a closed state, the liquid flows from the cavity to the low-pressure fluid conduit to decrease the pressure in the cavity.

In an embodiment, the mirror system further comprises a sensor system configured to generate a sensor signal representative for the profile of the reflective surface, wherein the controller is configured to actuate the actuator system in response to the sensor signal.

In an embodiment, the actuator system has a bandwidth of at least 100 Hz, preferably at least 500 Hz, more preferably at least 1000 Hz.

According to an aspect of the invention, there is provided a radiation system comprising a laser system configured for irradiating droplets of a fuel with a laser beam, wherein the laser system comprises an optical path arranged to transport the laser beam from a radiation source to a target region, wherein the optical path comprises at least one mirror system of the invention.

According to an aspect of the invention, there is provided an exposure apparatus comprising a mirror system of the invention.

Further features of the disclosure, as well as the structure and operation of various embodiments of the disclosure, are described in detail below with reference to the accompanying drawings. It is noted that the disclosure is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form part of the specification, illustrate the present disclosure and, together with the description, further serve to explain the principles of the disclosure and to enable a person skilled in the relevant art(s) to make and use the disclosure. Embodiments of the present disclosure will now be described, by way of example only, with reference to the accompanying schematic drawings, in which:
Figure 1 depicts a lithographic system comprising a lithographic apparatus and a radiation source;
Figure 2 depicts a schematic illustration of a first embodiment of a mirror system;
Figure 3 depicts a schematic illustration of the mirror system of Figure 2, wherein a fluid is hydraulically pressurized.
Figure 4 depicts a schematic illustration of a second embodiment of a mirror system;
Figure 5 depicts a schematic illustration of a third embodiment of a mirror system;
Figure 6 depicts a schematic illustration of a fourth embodiment of a mirror system;
Figure 7 depicts a schematic illustration of a fifth embodiment of a mirror system.

The features of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements. Additionally, generally, the left-most digit(s) of a reference number identifies the drawing in which the reference number first appears. Unless otherwise indicated, the drawings provided throughout the disclosure should not be interpreted as to-scale drawings.

### DETAILED DESCRIPTION

The invention will be explained in more detail below with reference to drawings in which illustrative embodiments thereof are shown. The drawings are intended exclusively for illustrative purposes and not as a restriction of the inventive concept which is to cover all modifications, equivalents, and alternatives falling within the scope of the present invention. The scope of the invention is only limited by the definitions presented in the appended claims.

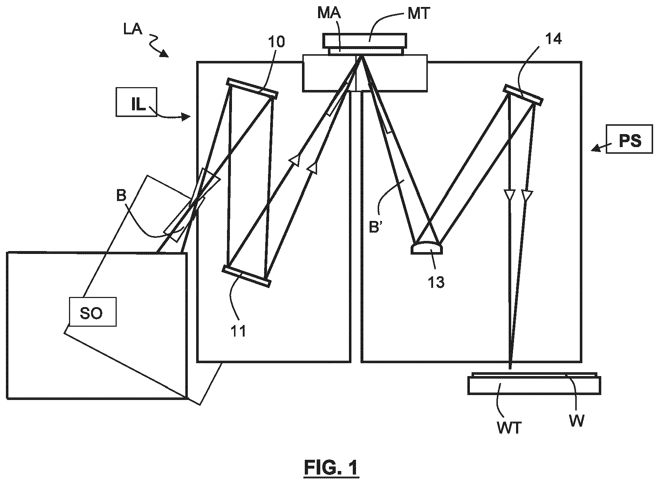

Fig. 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13,14 in Fig. 1, the projection system PS may include a different number of mirrors (e.g. six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO may be a laser produced plasma (LPP) source, a discharge produced plasma (DPP) source, a free electron laser (FEL) or any other radiation source that is capable of generating EUV radiation.

The term "projection system" used herein should be broadly interpreted as encompassing any type of projection system, including refractive, reflective, catadioptric, magnetic, electromagnetic and electrostatic optical systems, or any combination thereof, as appropriate for the exposure radiation being used, or for other factors such as the use of an immersion liquid or the use of a vacuum. The patterning device MA may be a mask or reticle, which imparts a pattern to a radiation beam transmitted or reflected by the patterning device. Well-known modes of operation include a stepping mode and a scanning mode. As is well known, the projection system PS may cooperate with support and positioning systems for the substrate W and the patterning device MA in a variety of ways to apply a desired pattern to many target portions across the substrate W. Programmable patterning devices may be used instead of reticles having a fixed pattern. The radiation for example may include electromagnetic radiation in the deep ultraviolet (DUV) or extreme ultraviolet (EUV) wavebands. The present disclosure is also applicable to other types of lithographic process, for example imprint lithography and direct writing lithography, for example by electron beam.

The depicted apparatus could be used in a variety of modes. In a scan mode, the patterning device support (e.g., mask table) MT and the substrate table WT are scanned synchronously while a pattern imparted to the radiation beam is projected onto a target portion (i.e., a single dynamic exposure). A direction in which the patterning device MA is scanned is called a scanning direction. The speed and direction of the substrate table WT relative to the patterning device support (e.g., mask table) MT may be determined by the (de-)magnification and image reversal characteristics of the projection system PS. In the scan mode, a maximum size of the exposure field limits the width (in the non-scanning direction) of the target portion in a single dynamic exposure, whereas the length of the scanning motion determines the height (in the scanning direction) of the target portion. Other types of lithographic apparatus and modes of operation are possible, as is well-known in the art. For example, a step mode is known. In step mode, the patterning device supports MT, and the substrate table WT are kept essentially stationary, while an entire pattern imparted to the radiation beam B is projected onto a target portion at one time (i.e., a single static exposure). The substrate table WT is then shifted in a X and/or Y direction so that a different target portion may be exposed.

Combinations and/or variations on the above-described modes of use or entirely different modes of use may also be employed. For example, in a step-and-scan mode an area that receives light at any point in time is smaller than the full field. This area is called a slit as described below. During the exposure process, both the substrate W and the patterning device MA are moved (at a substantially constant speed). The patterning device MA is scanned such that each portion of the pattern, corresponding to a size of the slit, gets sequentially illuminated. The reflected radiation from the patterning device MA is directed to the substrate W which is moved in synchronism to project the illuminated portion of the pattern at a correct location on the substrate W.

The largest area which can be exposed in a single exposure of a lithographic apparatus is defined by its scanning field area. The illumination system IL may comprise an illumination slit which determines the scanning field area, i.e. an illuminated area of the patterning device MA per a single scan. This is defined by a width of the illumination slit in the scanning direction (often designated as an X-direction) and the maximum scan length in the orthogonal direction (the non-scanning direction, often designated as a Y-direction) of the same plane (in short, the orthogonal direction Y). In some cases, the die area (the substrate area of the device being manufactured, referred to herein as the substrate field area or substrate region area) is larger than the maximum scanning field area. In this situation, some or all layers of the device need to be exposed to the substrate region (or substrate field) in multiple (e.g., two) separate adjacent exposures. For example: a substrate region twice as large as the maximum scanning field area may be exposed in two exposures: a first exposure using a first reticle comprising a first pattern is used to print a first substrate sub-region (e.g., first half in terms of area on the substrate) of the layer, and a second reticle comprising a second pattern is used to print a second sub-region of the layer (e.g., the second half) on the substrate, adjacent the first half therefore forming the complete layer. The two halves can be referred to as having been "stitched" together, with the process sometimes referred to as intra-die stitching.

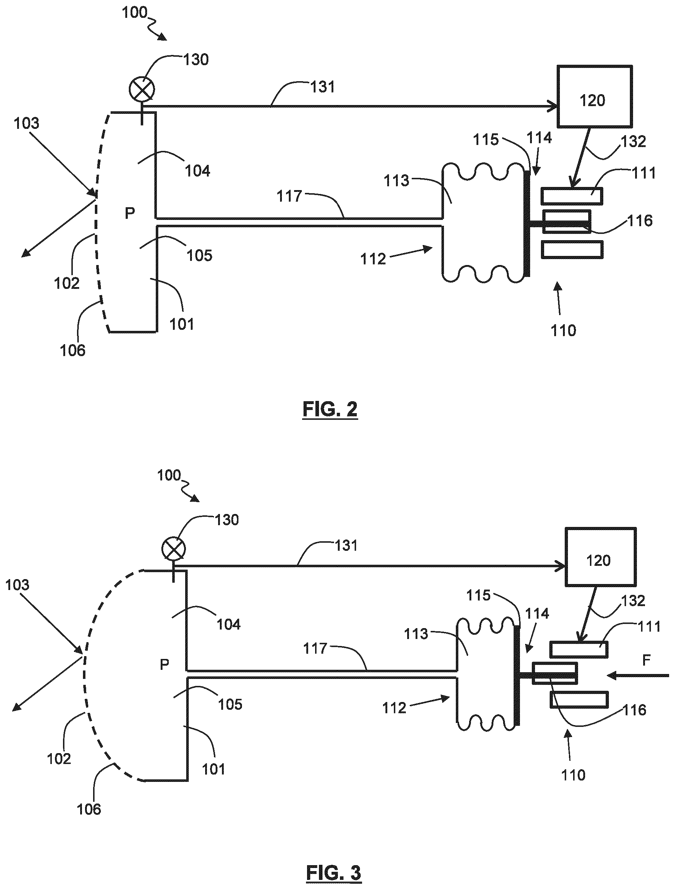

Figures 2-3 show a schematic illustration of a first embodiment of a mirror system 100. The mirror system 100 comprises a deformable mirror 101. The deformable mirror 101 can be arranged in an optical path of a laser system (not shown). The deformable mirror 101 comprises a deformable reflective surface 102. The deformable reflective surface 102 is configured to receive and reflect a laser beam 103 generated by a laser source of the laser system, such as an EUV light source. The laser beam 103 may be part of a pulsed high-energy beam train, for example in the order of kilowatts average power, used to irradiate tin droplets for EUV light generation. The reflective surface 102 may be formed of a metal layer, such as copper or a copper alloy, or a coating layer, and is designed to withstand high optical and thermal loads.

The deformable mirror 101 further comprises a cavity 104 arranged behind the reflective surface 102. The cavity 104 comprises a fluid 105, preferably an incompressible liquid. The fluid 105 is for example water or oil, or another thermally stable hydraulic medium. As shown in figures 2-3, the reflective surface 102 is attached on a flexible wall 106 of the cavity 104 (indicated by the dotted line). The flexible wall 106 forms an integral part of the cavity 104, allowing controlled deflection of the reflective surface 102 when pressure P is varied in the cavity 104.

The mirror system 100 further comprises an actuator system 110 configured to hydraulically pressurize the fluid 105 in the cavity 104 for deforming a profile of the reflective surface. The actuator system 110 comprises an electromagnetic actuator 111 configured to exert a controllable force on a movable body 112, which is in fluid communication with the cavity 104 behind the deformable reflective surface 102. Alternatively, the actuator may be a magnetostrictive actuator, a piezoelectric actuator, a reluctance actuator or hybrid reluctance actuator. In the depicted embodiment, the movable body 112 is implemented as a bellow 113, although other compliant structures, such as a flexible membrane or a flexible magnetic membrane, may also be used.

The bellow 113 is operatively coupled to a drive member 114, which is configured to induce deformation of the bellow 113. The drive member 114 comprises a piston 115 attached to a shaft 116. The electromagnetic actuator 111 applies a magnetic force F to the drive member 114. In reaction to the magnetic force F, the drive member 114 is arranged to move axially relative to the electromagnetic actuator 111 and to displace the fluid 105 in response to actuation. The movement of the piston 115 causes the bellow 113 to expand or contract, thereby modulating the pressure exerted on the hydraulic fluid 105 within the cavity 104. In Figure 2, the deformable mirror 101 is shown in an initial, undeformed condition, wherein no significant magnetic force F is applied by the electromagnetic actuator 111, and the reflective surface 102 exhibits a substantially flat or neutral curvature profile. In contrast, Figure 3 illustrates the condition where the magnetic force F has been exerted or increased. As a result, the bellow 113 is contracted, thereby increasing the pressure exerted by the fluid 105 on the reflective surface 102. This causes a deformation of the reflective surface 102, increasing its curvature.

Alternatively, in the first embodiment of the mirror system 100, instead of using the bellow 113 as the fluid displacement mechanism, a cylinder-piston assembly may be employed. In this alternative, the actuator system 110 comprises a cylinder in which the piston 115 is movably arranged. The piston 115 is configured to slide axially within the cylinder, thereby varying the exerting pressure on the fluid 105 enclosed within the cavity 104 of the deformable mirror 101. By moving the piston 115 inward into the cylinder, the volume available to the fluid 105 is reduced, thereby increasing the pressure P in the cavity 104. This causes the reflective surface 102 to deform outwardly (see Fig. 3).

A fluid hose 117 is fluidly coupled between the cavity 104 of the deformable mirror 101 and the bellow 113. The fluid hose 117 allows the fluid 105 to be displaced between the bellow 113 and the cavity 104, enabling precise transmission of pressure to the reflective surface 102. Preferably, the fluid 105 itself is incompressible (e.g., water or oil), allowing for high fidelity transmission of pressure pulses.

The magnetic force F is precisely controlled by modulating the electrical current supplied to the electromagnetic actuator 111, thereby enabling high-bandwidth dynamic control of the fluid pressure and, consequently, the reflective surface deformation.

A controller 120 of the mirror system 100 is configured to actuate the electromagnetic actuator 111 via a control signal 132. In operation, the controller 120 is configured to drive the electromagnetic actuator 111 based on either feedforward data (e.g., laser pulse timing) or feedback from a sensor system 130, allowing real-time compensation. For example, the controller 120 receives a sensor signal 131 representative for the profile of the reflective surface 102 and actuates the electromagnetic actuator 111 accordingly. The sensor signal 131 is generated by the sensor system 130. The sensor system 130 is for example configured to measure the pressure P inside the cavity 104.

When the laser power is modulated, for example when the laser power is reduced or switched off (e.g. during dark periods), a thermal transient is induced, which causes the temperature of the mirror system 100 to drop. For example, switching off the laser power results in a temporary deformation of the mirror reflective surface 102 due to thermal contraction. Upon reactivation of the laser system, a second thermal transient may occur, where the mirror system 100 heats up again and is deformed accordingly. Additionally, or alternatively, thermal transient effects may be thermal expansion of mirror components, gas lensing and gain lensing. To compensate for these thermal transient effects in real time, the controller 120 actuates the actuator system 111.

The hydraulic actuation concept shown in Figures 2-3 enables a higher control bandwidth than conventional pneumatic systems, overcoming the natural frequency and flow limitations of gas-based actuators. Unlike pneumatic systems, which are limited by the compressibility of air and the acoustic resonance of long hoses (typically < 200 Hz), the use of an incompressible fluid in combination with electromagnetic actuation permits significantly higher control bandwidths. For example, with a hose length of around 80 cm and water as the medium, the theoretical resonance frequency exceeds 900 Hz due to the high speed of sound in liquid (approx. 1500 m/s). Higher bandwidths may be achievable by minimizing the hose length or integrating the actuator system closer to the cavity 104. Further, the deformation range required for effective correction is relatively small (on the order of 50 µm at the center of the mirror), which is compatible with the stroke capability of the piston-actuated system. The actuator force F can be minimized by optimizing the ratio between the piston area and the mirror area. Further, the mirror system 100 enables a high curvature actuation velocity.

The mirror system 100 of Figures 2-3 is particularly suited for use in EUV systems where fast laser cycling and energy-saving modes impose strict requirements on optical surface stability and response speed.

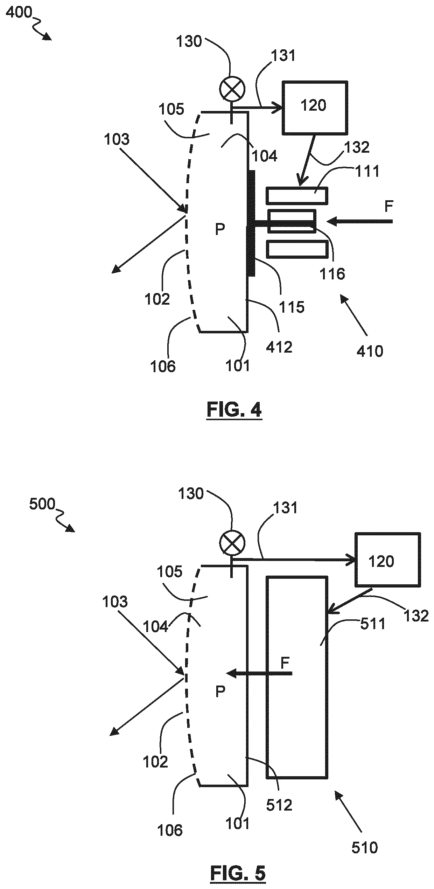

Figure 4 shows a schematic illustration of a second embodiment of a mirror system 400. In the embodiment of Figure 4, the mirror system 400 includes a modified structure for deforming the profile of the reflective surface 102 to compensate for thermal transients. The features of the mirror system 100 of the first embodiment are also applicable to the second embodiment, such as the drive member 114 except for the following difference, which will now be described.

Unlike the first embodiment, wherein a fluid hose hydraulically couples a remote actuator system to the mirror cavity, the piston 115 in the second embodiment is directly connected to the deformable mirror 101. The deformable mirror 101 comprises an integrated flexible membrane 412, functioning as the movable body of the actuator system 410, which bounds the cavity 104 filled with the fluid 105, such as water or oil. The flexible membrane 412 is in mechanical contact with the fluid 105 and is configured to transfer a force F of the axial motion of the piston 115 directly into hydraulic pressure on the fluid 105, thereby deforming the reflective surface 102. Alternatively, the movable body 412 may be a bellow.

The configuration of Figure 4 eliminates the need for a fluid hose, thereby removing limitations imposed by acoustic resonance in the fluid line. Since the resonance frequency of the hydraulic system is no longer constrained by hose length and the speed of sound in the fluid medium, the theoretical and practical bandwidth of the actuation system 410 is significantly increased. In this case, the dynamic response of the mirror system 400 is primarily defined by the capabilities of the electromagnetic actuator 111 and the required actuation force, rather than by fluidic constraints.

As in the first embodiment, the actuator force F is controlled by a controller 120 that regulates electrical current supplied to the electromagnetic actuator 111 via control signal 132. In this way, the deformation profile of the reflective surface 102 can be dynamically adjusted in real-time with a higher actuation bandwidth, allowing compensation of both slow and fast thermal transients, such as those caused by laser power modulation.

By integrating the flexible membrane 412 into the deformable mirror 101, this second embodiment also allows for a more compact mechanical architecture, potentially reducing parasitic thermal loads and enabling closer coupling of the actuation mechanism to the deformable mirror 101.

Alternatively, as shown in Figure 5, a third embodiment of a mirror system 500 is provided. In this embodiment, the mirror system 500 also comprises a deformable mirror 101. As in the previous embodiments, the mirror system 500 may be arranged in an optical path of a laser source for receiving and reflecting a laser beam 103. The mirror system 500 includes the reflective surface 102 formed on or supported by the flexible wall 106, and the cavity 104 located behind the reflective surface 102. The cavity 104 is filled with the fluid 105, for example an incompressible liquid such as water or oil.

In contrast to the first and second embodiments, the mirror system 500 of the third embodiment comprises a directly actuated flexible membrane 512 that forms part of the deformable mirror 101. The flexible membrane 512 may for example be made from a magnetic material or comprise an embedded magnetic layer, allowing it to be directly displaced by a magnetic field generated by an electromagnet 511 of the actuator system 510. In this embodiment, no drive shaft, piston, or separate actuator housing is needed. Instead, the magnetic force F is applied directly to the flexible membrane 512, thereby deforming its curvature relative to the cavity 506. Alternatively, the electromagnet 511 may be arranged inside the deformable mirror 101.

Because the fluid 105 within the cavity 104 is substantially incompressible, displacing the flexible membrane 512 inward leads to an increase in pressure P acting uniformly across the reflective surface 102. This change in pressure P causes a controlled deformation of the reflective surface 102. Conversely, reducing the magnetic actuation force F allows the flexible membrane 512 and reflective surface 102 to relax toward their original profile. Since the internal volume of the cavity 104 remains substantially constant and sealed, the mirror system 500 functions as a closed-loop hydrostatic pressure chamber, with the flexible membrane 512 acting as the pressure-controlling interface.

The design of the third embodiment avoids mechanical linkages (e.g., shafts or pistons) and minimizes the number of moving components, resulting in a lower effective moving mass compared to the second embodiment. This reduction in mass, together with the direct actuation mechanism and short hydraulic path, allows for a substantially increased actuation bandwidth. In particular, this third embodiment aims to achieve an actuation bandwidth that exceeds that of the first and second embodiments. The theoretical upper limit is defined by the electromagnetic response of the electromagnet 511, the stiffness of the flexible membrane 512, and the hydraulic coupling between the flexible membrane 512 and the reflective surface 102. In practice, this configuration enables dynamic compensation of fast thermal transients - for example, those caused by abrupt laser power changes during wafer exchange or system startup - at frequencies that may reach or exceed 1 kHz.

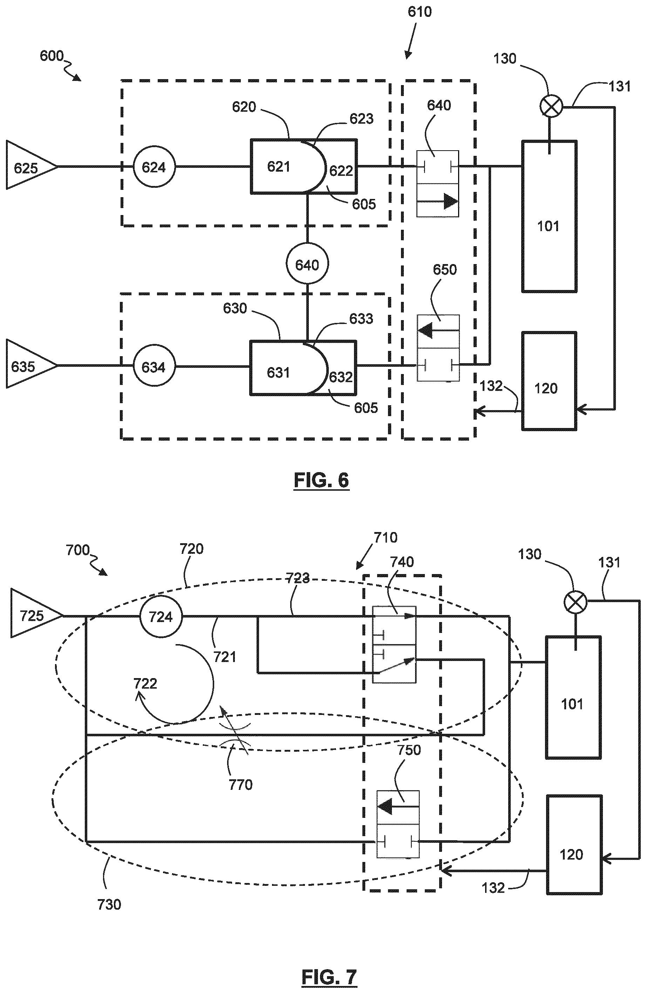

Figure 6 shows a schematic illustration of a fourth embodiment of a mirror system 600. In the embodiment of Figure 6, the mirror system 600 includes an alternative actuator system for deforming the profile of the reflective surface to compensate for thermal transients. The features of the mirror systems 200, 400, 500 of the first, second and/or third embodiments are also applicable to the fourth embodiment, such as the deformable mirror 101 except for the following difference, which will now be described.

The actuator system 610 of the fourth embodiment differs from the actuator systems described in the first three embodiments shown in Figures 2-5. In the shown fourth embodiment of Figure 6, the actuator system 610 comprises a pneumatic-hydraulic hybrid configuration with a high-pressure vessel 620 and a low-pressure vessel 630. These two vessels work in conjunction with a compensation pump 640 that maintains a desired pressure differential between the vessels.

The high-pressure vessel 620 comprises a high-pressure in-compartment 621 and a high-pressure out-compartment 622. The in-compartment 621 is supplied with a high-pressure fluid 625. The high-pressure fluid 625 in the shown embodiment is a gas, such as air, helium or nitrogen, on which a high-pressure is exerted via a high-pressure pump 624. The out-compartment 622 is filled with hydraulic fluid 605, which is in fluid communication with the cavity of the deformable mirror 101. A first movable separation wall 623 is arranged between the in- and out-compartments to isolate the gas and fluid volumes. The first movable separation wall 623 may take the form of a bellow, a flexible diaphragm, or an elastic membrane, and is configured to transfer pressure without mixing the media. Alternatively, the first movable separation wall may be a piston, e.g. a sealed piston.

Similarly, the low-pressure vessel 630 includes a low-pressure in-compartment 631, supplied with a low-pressure fluid 635 at a lower pressure via a low-pressure pump 634, and a low-pressure out-compartment 632, also containing the hydraulic fluid 605, which is in fluid communication with the cavity of the deformable mirror 101. These two compartments are likewise separated by a second movable separation wall 633, which may be implemented as a bellow, membrane or piston similar to the first movable separation wall 623. Alternatively, the in-compartments 622, 623 of both vessels are supplied via a common gas supply source.

The actuator system 610 further comprises a high-pressure control valve 640 and a low-pressure control valve 650. The high-pressure control valve 640 is arranged between the high-pressure out-compartment 622 and the deformable mirror 101 and may be implemented as a fast-response valve, for example a piezoelectric or solenoid-operated valve. In a corresponding manner, the low-pressure control valve 650 is arranged between the low-pressure out-compartment 632 and the deformable mirror 101, and is also preferably a fast-response valve, for example a piezoelectric or solenoid-operated valve.

The controller 120 is configured to actuate one or both valves 640, 650 via control signal 132 to control the pressure within the cavity of the deformable mirror 101. When the high-pressure control valve 640 is actuated in an open state, pressurized fluid 605 is supplied from the high-pressure out-compartment 622 to the cavity. The pressure difference between the high-pressure vessel 620 and the cavity causes the first movable separation wall 623 to move, pushing the fluid 605 toward the cavity. This increases the pressure in the cavity and causes the reflective surface to deform, e.g. outward. When the low-pressure control valve 650 is actuated in an open state by the controller 120 via control signal 132, the fluid 605 flows out of the cavity toward the lower-pressure out-compartment 632, causing the second movable wall 623 to move accordingly. Consequently, the reflective surface deforms, e.g. inward, or returns toward its original shape or curvature.

This arrangement enables bidirectional pressure control of the fluid 605 in the cavity with minimal mechanical inertia, as no mechanical drive members or shafts need to be accelerated during operation. Only the flexible separation walls 623, 633 deform in response to pressure changes. The pressure sources are statically available and do not require active pumping at the time of actuation.

While the actuation system 610 still relies on pneumatic actuation principles, the acoustic limitations typically associated with compressible media (i.e., gas) are substantially mitigated by minimizing the pneumatic path length. The pressure pulses are transmitted via the hydraulic (liquid) section, which behaves as a stiff and fast transmission line due to the incompressible nature of the fluid 605. As a result, bandwidth capabilities are greatly improved compared to traditional pneumatic-only systems. For small gas volumes, the dynamic response approaches that of a fully liquid-based system, achieving high-speed operation suitable for demanding optical compensation tasks.

This fourth embodiment combines the robustness and stability of hydraulic systems with the simplicity and responsiveness of pneumatic pre-pressurization, offering a scalable and effective solution for real-time mirror surface control.

Figure 7 shows a schematic illustration of a fifth embodiment of a mirror system 700. In the embodiment of Figure 7, the mirror system 700 includes an alternative actuator system for deforming the profile of the reflective surface to compensate for thermal transients. The features of the mirror systems 200, 400, 500, 600 of the first, second, third and/or fourth embodiments are also applicable to the fifth embodiment, such as the deformable mirror 101 except for the following difference, which will now be described.

The actuator system 710 of the fifth embodiment introduces a circulation conduit 722, in which the actuation force is generated by a continuous circulation of high-pressure fluid, as opposed to a compressible gas system or mechanically accelerated piston structure. The actuator system 710 comprises a high-pressure fluid loop 720 including a high-pressure fluid inlet 721 which is supplied with a pressurized liquid 725, such as water, via a pressure pump 724. The high-pressure fluid loop 710 further comprises a high-pressure outlet 723 arranged in fluid communication between the circulation conduit 722 and the deformable mirror 101. The circulation conduit 722 circulates the pressurized liquid 725 through the high-pressure fluid loop 720 in a closed loop. **In** parallel, a low-pressure fluid conduit 730 is provided in fluid communication with the deformable mirror 101. The low-pressure fluid conduit 730 is used to relieve pressure in the cavity of the deformable mirror 101 when desired.

A high-pressure loop control valve 740 (e.g. a 3-way valve) is arranged between the high-pressure fluid loop 720 and the deformable mirror 101, enabling selective pressurization of the cavity by redirecting part of the high-pressure flow into the cavity. When the controller 120 actuates the high-pressure loop control valve 740 via control signal 132 to its open state, fluid flows from the high-pressure loop 720 via the high-pressure fluid outlet 723 into the cavity of the deformable mirror 101, thereby increasing the internal pressure of the deformable mirror 101 and deforming the reflective surface, e.g. outwardly.

To reduce the pressure in the cavity, the controller 120 actuates via control signal 132 a low-pressure loop control valve 750 (e.g. a 2-way valve) that connects the deformable mirror 101 to the low-pressure fluid conduit 730, enabling fluid outflow from the cavity of the deformable mirror 101 and, for example, allowing the reflective surface to return toward its initial curvature.

A restriction valve 770 is arranged between the high-pressure fluid loop 720 and the low-pressure fluid conduit 730. This restriction valve 770 provides a controlled flow path between the high and low-pressure sides, acting as a damping element to prevent uncontrolled or excessive fluid exchange that could lead to pressure spikes, oscillations, or instability in the mirror system 700. Additionally, the restriction valve 770 may act as a safety feature, ensuring that even in the event of simultaneous valve actuation or leakage, fluid flows are regulated to protect the deformable mirror 101 from overpressure or abrupt deformation. The restriction valve 770 also maintains pressure differentials that are essential for consistent and repeatable control of the cavity pressure.

An advantage of the fifth embodiment is that the pressurized liquid is already circulating through the system at operational pressure, meaning that no mechanical parts (such as pistons or membranes) need to be accelerated at the moment of actuation. As such, the mirror system 700 exhibits minimal mechanical inertia, resulting in faster response times. In addition, the length of the fluid pathway between the deformable mirror 701 and the control valves 740, 750 can be minimized. This reduces the delay associated with fluid transfer and shortens the duration of pressure pulses, thereby further improving the bandwidth of the system. Due to the use of an incompressible fluid, pressure pulses are transmitted stiffly and efficiently, enhancing the precision and responsiveness of the deformable mirror.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Where the context allows, embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustic or other forms of propagated signals (e.g. carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

Further, this document describes the following clauses of the present invention:
1. A mirror system comprising
   a deformable mirror configured to be arranged in an optical path of a laser system, the deformable mirror comprising
   a deformable reflective surface configured to reflect a laser beam generated by the laser system, and
   a cavity arranged behind the reflective surface, wherein the cavity comprises a fluid configured to be hydraulically pressurized,
   an actuator system configured to pressurize the fluid in the cavity for deforming a profile of the reflective surface,
   a controller configured to actuate the actuator system such that the fluid deforms the profile of the reflective surface to compensate for thermal transients.
2. The mirror system of clause 1, wherein the fluid is a liquid, preferably an incompressible liquid such as water or oil.
3. The mirror system of clause 1 or clause 2, wherein the actuator system comprises an electromagnetic actuator, magnetostrictive actuator or piezoelectric actuator configured to exert a force in order to pressurize the fluid.
4. The mirror system of any of the preceding clauses, wherein the actuator system comprises a movable body being in contact with the fluid, wherein the controller is configured to actuate the movable body such that the fluid deforms the reflective surface of the deformable mirror.
5. The mirror system of clause 4, wherein the movable body is deformable such as a bellow or flexible membrane, for example a flexible magnetic membrane.
6. The mirror system of any of the clauses 4-5, wherein the movable body is connected to a drive member, wherein the drive member is configured to move the movable body relative to the cavity such that the fluid deforms the reflective surface of the deformable mirror.
7. The mirror system of clause 6, wherein the drive member comprises a piston with a shaft, wherein the piston is connected to the movable body.
8. The mirror system of any of the clauses 4-7, further comprising a fluid hose connected at one end to the cavity of the deformable mirror and at the other end to the movable body, wherein the fluid hose is configured to transport the fluid between the cavity and the movable body.
9. The mirror system of any of the clauses 4-7, wherein the movable body is part of the deformable mirror.
10. The mirror system of clause 2, wherein the actuator system comprises
   a high-pressure vessel with a high-pressure in-compartment for receiving a high-pressure fluid and a high-pressure out-compartment in fluid communication with the cavity, the high-pressure in- and out-compartments being separated by a first movable separation wall,
   a low-pressure vessel with a low-pressure in-compartment for receiving a low-pressure fluid and a low-pressure out-compartment in fluid communication with the cavity, the low-pressure in-and out-compartments being separated by a second movable separation wall,
   a high-pressure control valve being arranged in fluid communication between the high-pressure vessel and the cavity,
   a low-pressure control valve being arranged in fluid communication between the low-pressure vessel and the cavity,
   and wherein the controller is configured for actuating the high-pressure control valve and/or the low-pressure control valve to increase or decrease the pressure in the cavity.
11. The mirror system of clause 10, wherein the first movable separation wall and/or the second movable separation wall is a bellow, a membrane or a piston.
12. The mirror system of clause 10 or clause 11, wherein the high-pressure control valve and/or the low-pressure control valve is a piezoelectric valve or solenoid valve.
13. The mirror system of any of the clauses 10-12, wherein, when the high-pressure control valve is actuated in an open state, the liquid flows from the high-pressure out-compartment to the cavity to increase the pressure in the cavity, and wherein, when the low-pressure control valve is actuated in an open state, the liquid flows from the cavity to the low-pressure out-compartment to decrease the pressure in the cavity.
14. The mirror system of clause 2, wherein the actuator system comprises
   a high-pressure fluid loop comprising
   a high-pressure inlet for receiving a high-pressure fluid,
   a circulation conduit in fluid communication with the high-pressure inlet and the actuator system is configured to circulate the high-pressure fluid through the circulation conduit, and
   a high-pressure outlet being arranged in fluid communication between the circulation conduit and the cavity,
   a low-pressure fluid conduit in fluid communication with the cavity,
   a high-pressure loop control valve being arranged in fluid communication between the high-pressure fluid loop and the cavity,
   a low-pressure loop control valve being arranged in fluid communication between the low-pressure fluid conduit and the cavity,
   and wherein the controller is configured for actuating the high-pressure loop control valve and/or the low-pressure loop control valve to increase or decrease the pressure in the cavity.
15. The mirror system of clause 14, wherein the high-pressure loop control valve and/or the low-pressure loop control valve is a piezoelectric valve or solenoid valve.
16. The mirror system of clause 14 or clause 15, wherein, when the high-pressure loop control valve is actuated in an open state, the liquid flows from the high-pressure outlet to the cavity to increase the pressure in the cavity, and wherein, when the low-pressure loop control valve is actuated in an open state and the high-pressure loop control valve in a closed state, the liquid flows from the cavity to the low-pressure fluid conduit to decrease the pressure in the cavity.
17. The mirror system of any of preceding clauses, further comprising a sensor system configured to generate a sensor signal representative for the profile of the reflective surface, wherein the controller is configured to actuate the actuator system in response to the sensor signal.
18. The mirror system of any of the preceding clauses, wherein the actuator system has a bandwidth of at least 100 Hz, preferably at least 500 Hz, more preferably at least 1000 Hz.
19. A radiation system comprising a laser system configured for irradiating droplets of a fuel with a laser beam, wherein the laser system comprises an optical path arranged to transport the laser beam from a radiation source to a target region, wherein the optical path comprises at least one mirror system of any of the preceding clauses.
20. An exposure apparatus comprising a mirror system of any of the clauses 1-18.

## Claims

1. A mirror system comprising
a deformable mirror configured to be arranged in an optical path of a laser system, the deformable mirror comprising:
a deformable reflective surface configured to reflect a laser beam generated by the laser system, and
a cavity arranged behind the reflective surface, wherein the cavity comprises
a fluid configured to be hydraulically pressurized,
an actuator system configured to pressurize the fluid in the cavity for deforming a profile of the reflective surface,
a controller configured to actuate the actuator system such that the fluid deforms the profile of the reflective surface to compensate for thermal transients.

2. The mirror system of claim 1, wherein the fluid is a liquid, preferably an incompressible liquid such as water or oil.

3. The mirror system of claim 1 or claim 2, wherein the actuator system comprises an electromagnetic actuator, magnetostrictive actuator or piezoelectric actuator configured to exert a force in order to pressurize the fluid.

4. The mirror system of any of the preceding claims, wherein the actuator system comprises a movable body being in contact with the fluid, wherein the controller is configured to actuate the movable body such that the fluid deforms the reflective surface of the deformable mirror.

5. The mirror system of claim 4, wherein the movable body is deformable such as a bellow or flexible membrane, for example a flexible magnetic membrane.

6. The mirror system of any of the claims 4-5, wherein the movable body is connected to a drive member, wherein the drive member is configured to move the movable body relative to the cavity such that the fluid deforms the reflective surface of the deformable mirror.

7. The mirror system of any of the claims 4-6, further comprising a fluid hose connected at one end to the cavity of the deformable mirror and at the other end to the movable body, wherein the fluid hose is configured to transport the fluid between the cavity and the movable body.

8. The mirror system of claim 2, wherein the actuator system comprises
a high-pressure vessel with a high-pressure in-compartment for receiving a high-pressure fluid and a high-pressure out-compartment in fluid communication with the cavity, the high-pressure in- and out-compartments being separated by a first movable separation wall,
a low-pressure vessel with a low-pressure in-compartment for receiving a low-pressure fluid and a low-pressure out-compartment in fluid communication with the cavity, the low-pressure in-and out-compartments being separated by a second movable separation wall,
a high-pressure control valve being arranged in fluid communication between the high-pressure vessel and the cavity,
a low-pressure control valve being arranged in fluid communication between the low-pressure vessel and the cavity,
and wherein the controller is configured for actuating the high-pressure control valve
and/or the low-pressure control valve to increase or decrease the pressure in the cavity.

9. The mirror system of claim 8, wherein, when the high-pressure control valve is actuated in an open state, the liquid flows from the high-pressure out-compartment to the cavity to increase the pressure in the cavity, and wherein, when the low-pressure control valve is actuated in an open state, the liquid flows from the cavity to the low-pressure out-compartment to decrease the pressure in the cavity.

10. The mirror system of claim 2, wherein the actuator system comprises
a high-pressure fluid loop comprising
a high-pressure inlet for receiving a high-pressure fluid,
a circulation conduit in fluid communication with the high-pressure inlet and the actuator system is configured to circulate the high-pressure fluid through the circulation conduit, and
a high-pressure outlet being arranged in fluid communication between the circulation conduit and the cavity,
a low-pressure fluid conduit in fluid communication with the cavity,
a high-pressure loop control valve being arranged in fluid communication between the high-pressure fluid loop and the cavity,
a low-pressure loop control valve being arranged in fluid communication between the low-pressure fluid conduit and the cavity,
and wherein the controller is configured for actuating the high-pressure loop control valve and/or the low-pressure loop control valve to increase or decrease the pressure in the cavity.

11. The mirror system of claim 10, wherein, when the high-pressure loop control valve is actuated in an open state, the liquid flows from the high-pressure outlet to the cavity to increase the pressure in the cavity, and wherein, when the low-pressure loop control valve is actuated in an open state and the high-pressure loop control valve in a closed state, the liquid flows from the cavity to the low-pressure fluid conduit to decrease the pressure in the cavity.

12. The mirror system of any of preceding claims, further comprising a sensor system configured to generate a sensor signal representative for the profile of the reflective surface, wherein the controller is configured to actuate the actuator system in response to the sensor signal.

13. The mirror system of any of the preceding claims, wherein the actuator system has a bandwidth of at least 100 Hz, preferably at least 500 Hz, more preferably at least 1000 Hz.

14. A radiation system comprising a laser system configured for irradiating droplets of a fuel with a laser beam, wherein the laser system comprises an optical path arranged to transport the laser beam from a radiation source to a target region, wherein the optical path comprises at least one mirror system of any of the preceding claims.

15. An exposure apparatus comprising a mirror system of any of the claims 1-13.
